# EUROPÄISCHE PATENTSCHRIFT

(11) **EP 0 772 963 B1**
(45) Veröffentlichungstag und Bekanntmachung des Hinweises auf die Patenterteilung: **01.03.2000**
(21) Anmeldenummer: 96117825.8
(22) Anmeldetag: 07.11.1996
(51) Int. Cl.: A01C 5/06

(54) **Sägerät, insbesondere für die Mulch- und/oder Direktsaat**
Seed drill, especially for mulch- and/or direct seeding
Semoir, en particulier pour le semis direct et/ou en paillage

(30) Priorität: 09.11.1995 DE 19541874
(43) Veröffentlichungstag der Anmeldung: 14.05.1997
(73) Patentinhaber: Franz Kleine Agrartechnik GmbH, 33154 Salzkotten (DE)
(72) Erfinder: Schulte, Reinhold, 33106 Paderborn-Elsen (DE)
(74) Vertreter: Patentanwälte Rehberg + Hüppe

(56) Entgegenhaltungen:
- WO-A-95/05065
- DE-A- 3 111 181
- US-A- 4 295 532
- US-A- 4 598 654
- US-A- 5 370 070

## Beschreibung

Die Erfindung betrifft ein Sägerät, insbesondere für die Mulch- und/oder Direktsaat, mit zwei V-förmig gegeneinander angestellten Schneidscheiben zum spaltartigen Öffnen des Bodens und einem nachgeschalteten Säschar zum Formen und Stabilisieren des Querschnitts der aus dem Spalt gebildeten Furche, mit den im Oberbegriff des Patentanspruchs angegebenen Merkmalen. Unter Mulchsaat wird das Ausbringen der Samenkörner in eine Furche im Boden verstanden, bei der der Boden entweder überhaupt nicht oder lediglich oberflächennah bearbeitet worden ist. Unter Direktsaat wird hier das Ausbringen der Samenkörner verstanden, ohne daß eine Bodenbearbeitung vorher stattgefunden hat.

Beim Ausbringen von Samenkörnern mittels Sägeräten, die oft zu mehreren in dem gewünschten Reihenabstand nebeneinander an einem gemeinsamen Rahmen einer Sämaschine angeordnet werden, ergibt sich bei Mulchsaat oder Direktsaat das Problem, daß noch nicht verrottete Pflanzenbestandteile das ordnungsgemäße Ablegen der Samenkörner in der gebildeten Furche behindern. Dies ist insbesondere dann der Fall, wenn eine Direktsaat in den Boden erfolgt, auf dem noch Getreidestoppeln vorhanden sind und/oder auf dem Stücke von Getreidehalmen liegen. So ist es bei der Getreideernte nicht ungewöhnlich, die Strohhalme zu häckseln und auf der Fläche des Bodens liegenzulassen, so daß der Boden in Form eines relativ dichten Teppichs von dem Stroh abgedeckt ist. Dieser bringt in gewünschter Weise den Vorteil, daß der Boden vor übermäßigen Feuchtigkeitsverlusten und auch vor Erosion geschützt ist. Der Boden kann aber auch mit einer Zwischenfrucht bestellt sein, die als Deckfrucht dient, wobei die Pflanzenreste über Winter bis zum späteren Reihenschluß der aus den Samenkörnern entstehenden Pflanzen, insbesondere Rüben, einen optimalen Bodenschutz ergeben. In diese Fläche soll nun hineingesät werden. Dabei soll am Säort, also in der Reihe, beim Säen die Strohschicht oder die Pflanzenschicht möglichst nicht bewegt und auch nicht weggeräumt werden, weil sonst durch diese Bewegung das Unkrautwachstum angeregt und die Austrocknungsgefahr für den Boden gerade an dieser Stelle erhöht wird.

Aus der US-A-4,598,654 ist ein Sägerät der eingangs beschriebenen Art bekannt. Das Sägerät weist zwei V-förmig gegeneinander angestellte Schneidscheiben zum spaltartigen Öffnen des Bodens und ein nachgeschaltetes zwischen den Schneidscheiben angeordnetes Säschar zum Formen und Stabilisieren des Querschnitts der aus dem Spalt gebildeten Furche auf. Die Schneidscheiben sind unter Reibschluß gegeneinander angestellt, wobei sie sich in Fahrtrichtung vorne etwa in Höhe der Oberfläche des Bodens berühren. Die Schneidscheiben bilden in Verbindung mit dem Säschar eine im Grund W-förmige Furche aus. Jede Schneidscheibe ist entlang ihres Randes abwechselnd mit sich radial erstreckenden Vorsprüngen und mit bogenartig ausgebildeten Rücksprüngen versehen. Die ungerade Anzahl der Vorsprünge auf der einen Schneidscheibe stimmt mit der Anzahl der Vorsprünge auf der anderen Schneidscheibe nicht überein, sodaß keine Zuordnung zwischen den Vorsprüngen und Rücksprüngen an den Schneidscheiben quer zur Fahrtrichtung besteht. Die Vorsprünge der durch den Boden angetriebenen Schneidscheiben kommen miteinander in Reibkontakt. Die radiale Länge der Vorsprünge gegenüber den Rücksprüngen ist kleiner als die Tiefe des damit gebildeten Spalts. Die Schneidscheiben bewirken durch das Öffnen der Furche auch eine seitliche Aufwölbung des Bodens, verbunden mit einem seitlichen Wegräumen von Pflanzenresten, sodaß diese nicht in die Furche fallen können. Eine Dosiereinrichtung dient dem Abwurf der Samenkörner in die Furche. Es ist auch eine Einrichtung zum Schließen der Furche vorgesehen.

Ein weiteres Sägerät ist aus dem Prospekt der Anmelderin "UNICORN-3" mit dem Druckhinweis U3 1193 P4 bekannt. Es weist zwei V-förmig gegeneinander angestellte Schneidscheiben zum spaltartigen Öffnen des Bodens auf. Die Schneidscheiben besitzen kreisförmigen Umriß und sind so gegeneinander angestellt, daß ein V-förmiger Spalt entsteht. In diesen V-förmigen Spalt fallen auch Stücke von Strohhalmen und/oder anderen Pflanzenresten hinein, wobei sie von dem den Schneidscheiben nachfolgenden Schar oft auf den Grund der zu bildenden Furche gedrückt werden. Dieses ist insbesondere bei Strohhalmen der Fall, die in Fahrtrichtung der Sämaschine bzw. des Sägerätes liegen. Ein unmittelbar auf einem solchen Strohhalm am Grunde der Furche abgelegtes Saatkorn hat dann denkbar schlechte Keim- und Wachsbedingungen. Der Boden- und Wasseranschluß für dieses Saatkorn ist verschlechtert, wobei der Strohhalm gleichsam eine Isolierschicht bildet. Die Folge davon ist ein verschlechterter Saatgutaufgang.

Um diesem Nachteil entgegenzuwirken, ist es aus einem Prospekt der Firma Becker "Bodenbearbeitung Saattechnik Centra 2000" mit dem Druckhinweis 11/95 bekannt, im Bereich der zu bildenden Furche unter Verwendung von Hohlscheiben zunächst das Stroh und/oder die Pflanzenteile seitlich wegzuräumen, um ein Herabfallen in die zu bildende Furche zu verhindern. Dies gelingt bis zu gewissem Grade, erweist sich aber andererseits auch hier als ungünstig, weil durch das Wegräumen des Strohs auch oberflächennahe Bereiche des Bodens mitbewegt werden, so daß an dieser Stelle eine Anregung zum Unkrautwachstum erfolgt und andererseits die Austrocknungsgefahr im Bereich der Säreihe erhöht wird. Es tritt dann der Fall ein, daß in den noch abgedeckten Bereichen und in den freigeräumten Bereichen des Bodens unterschiedliche Unkräuter wachsen, die unterschiedlich bekämpft werden müssen. Dies ist aufwendig und nachteilig.

Der Erfindung liegt die Aufgabe zugrunde, ein Sägerät der eingangs beschriebenen Art bereitzustellen, mit dem auch bei Mulch- und/oder Direktsaat ein guter Bodenanschluß des Saatgutkorns erreicht werden kann, ohne daß zuvor der Bereich der zu bildenden Furche von Stroh, Pflanzenteilen u. dgl. freigeräumt werden muß.

Erfindungsgemäß wird dies bei einem Sägerät der eingangs beschriebenen Art dadurch erreicht, daß die V-förmig gegeneinander angestellten Schneidscheiben sich in ihrem unteren, in den Boden eindringenden Bereich berühren bzw. durchdringen, daß die sich radial erstreckenden Vorsprünge und Rücksprünge der beiden Schneidscheiben in Fahrtrichtung in Zuordnung zueinander abwechselnd nebeneinander vorgesehen sind, und daß beide Schneidscheiben so gegeneinander positioniert und drehfest miteinander verbunden sind, daß die Rücksprünge bzw. Vorsprünge der beiden Schneidscheiben in dem gebildeten Spalt quer zur Fahrtrichtung gegeneinander versetzte höckerartige Auflager erzeugen.

Die Erfindung geht von dem Gedanken aus, den durch die Schneidscheiben gebildeten Spalt mit einer etwa V-förmigen Ausbildung zu profilieren. Zu diesem Zweck berühren bzw. durchdringen sich die V-förmig gegeneinander angestellten Schneidscheiben in ihrem unteren, in den Boden eindringenden Bereich. Die beiden Schneidscheiben können mit ihren Vor- und Rücksprüngen in dem Spalt zwangläufig auf Lücke gegeneinander drehfest miteinander umlaufen. Dadurch werden am Grund der V-förmigen Furche vor dem Säschar höckerartige Auflager geschaffen, die höher als der Grund des Spalts angeordnet sind. Es werden so Auflagerbereiche für in die Furche bzw. den Spalt hineinfallende Stücke von Strohhalmen, Pflanzenresten u. dgl. gebildet, die das herabfallende Gut in einer Lage positionieren, die jedenfalls höher als der Grund des Spalts und der Boden der sich dann durch das nachfolgende Säschar bildenden Furche ist. Damit soll verhindert werden, daß z. B. Stücke von Strohhalmen auf den Grund des Spalts herabfallen können. Solche herabfallenden Stücke von Strohhalmen und/oder Pflanzenteilen werden vielmehr auf den gebildeten höckerartigen Auflagern im Spalt höher abgelagert, als es dem Grund des Spalts entspricht. Diese Pflanzenteile werden dann von dem nachfolgenden Säschar erfaßt und seitlich gegen die Wandung des Spalts und der sich durch das Schar bildenden Furche gepreßt, so daß sie an einem Herabfallen auf den Grund der einzigen Furche gehindert sind. Damit wird andererseits der Grund der V-förmigen Furche für die Ablage des Saatgutkornes freigehalten, d. h. die herabfallenden Saatgutkörner kommen unmittelbar mit dem Boden am Grunde der Furche in Verbindung bzw. zur Ablage, so daß ein sicherer Boden- und Wasseranschluß gewährleistet ist und die Keimfähigkeit nicht beeinträchtigt wird. Wesentlich an den Schneidscheiben sind nicht so sehr die Vorsprünge, sondern vielmehr die Rücksprünge, durch deren Verlauf die höckerartigen Auflager in dem Spalt gebildet werden. Diese höckerartigen Auflager bilden eine Reihe von Auflagern in dem Spalt, die insgesamt eine Ebene bilden, die höher als der Grund des Spalts und auf niedrigerem Niveau als die Oberfläche des Bodens angeordnet ist. Die höckerartigen Auflager sind so gegeneinander versetzt, daß gleichsam eine Sperrschicht für in den Spalt herabfallende Pflanzenteile gebildet wird. Die höckerartigen Auflager können einander überdecken, und zwar in einer Projektion der Auflager in Fahrtrichtung. Es ist aber auch möglich, daß die erzeugten Auflager mehr oder weniger punkt- oder linienförmig ausgebildet sind, um so das Herabfallen von Pflanzenteilen bis zum Grund des Spalts zu verhindern. Die in den Spalt eindringenden Stücke von Strohhalmen werden auf den Auflagern gleichsam auf einem Plateau abgelegt, welches sich nicht am Grund des Spalts, sondern in einem gewissen Abstand oberhalb des Grundes befindet. Damit hat das nachfolgende Säschar die Chance, solche Strohhalme nach der Seite hin zu drücken und damit den Grund des Spalts und der zu bildenden Furche nach dem Säschar weitgehend frei von Strohhalmen und anderen Pflanzenteilen zu halten. Die Schneidscheiben werden indirekt vom Boden angetrieben und können mechanisch miteinander gekoppelt sein. Dies wirkt einer Verstopfungsgefahr entgegen.

Die beiden Schneidscheiben können so gegeneinander positioniert und drehfest miteinander verbunden sein, daß die höckerartigen Auflager quer zur Fahrtrichtung mindestens aneinander anschließen. Dieser Anschluß ist zumindest in der Projektion der höckerartigen Auflager in eine quer zur Fahrtrichtung liegende Ebene gegeben. Es ist aber auch möglich, daß sich die höckerartigen Auflager in ihrem Querschnitt in dieser Richtung überlappen, also die durch die Vorsprünge erzeugten Vertiefungen, die bis zum Grunde des Spalts gehen, keinen Anschluß aneinander haben. Die beiden Schneidscheiben können sich mit ihren Vorsprüngen bzw. Rücksprüngen gegenseitig durchdringen oder aber so gegeneinander positioniert und angestellt sein, daß sie gleichsam spiegelbildlich zu einer Vertikalmittelebene in Fahrtrichtung angeordnet sind und einander gerade nicht durchdringen.

Die Vorsprünge und die Rücksprünge an den Schneidscheiben können rechteckigen Umriß aufweisen. Es ist aber auch möglich, daß die Vorsprünge und die Rücksprünge an den Schneidscheiben Trapezform oder Dreiecksform aufweisen. In diesem Falle werden die höckerartigen Auflager nicht vom Grunde des Rücksprungs, sondern von der Überdeckung zwischen Vorsprung und Rücksprung gebildet.

Die radiale Länge der Vorsprünge an den Schneidscheiben über die Rücksprünge hinaus sollte mindestens etwa ein Drittel der Tiefe des Spalts ausmachen, so daß in den Spalt herabfallende Pflanzenteile entsprechend höher als der Grund des Spalts aufgelagert und dort von dem nachfolgenden Säschar erfaßt werden.

Das den Schneidscheiben nachgeschaltete Säschar kann ein Scharsech aufweisen und so an dem Sägerät angeordnet sein, daß das Scharsech zwischen die Schneidscheiben eingreift. Zu diesem Zweck sind die Schneidscheiben so angeordnet, daß sie sich im hinteren, dem Schar zugekehrten Bereich öffnen, während sie im vorderen Bereich weitgehend geschlossen sind, um hier schnittartig in den Boden einzudringen und den Spalt zu bilden. Das Scharsech ragt zwischen die beiden Schneidscheiben von hinten hinein. Es erfüllt hier eine gewisse Säuberungsfunktion, indem an den Vorsprüngen der Schneidscheiben haftende Pflanzenteile kontinuierlich abgestreift werden. Dies begünstigt die Ausbildung der höckerartigen Auflager in dem Spalt. Auch an den Schneidscheiben anhaftende Erde kann durch das Scharsech kontinuierlich abgelöst werden.

Die Achsen der Schneidscheiben sind so gegeneinander angestellt, daß die Vorsprünge der beiden Schneidscheiben in dem in Fahrtrichtung vorderen Bereich näher beieinander angeordnet sind als im hinteren Bereich. Die Achsen der Schneidscheiben bilden in einer Horizontalebene miteinander einen Winkel, der in Fahrtrichtung gesehen etwas kleiner als 180° ist. Die Achsen der Schneidscheiben sind an sich windschief zu Horizontal- und Vertikalebenen angeordnet.

Die Achsen der Schneidscheiben können so gegeneinander angestellt sein, daß die Vorsprünge der einen Schneidscheibe in die durch die Rücksprünge der anderen Schneidscheibe erzeugten Ausnehmungen eingreifen. Damit ist es möglich, die Vorsprünge schneidenartig zuzuschärfen und so anzuordnen, daß am Grunde des Spalts eine gerade oder zickzackförmig verlaufende Linie der tiefsten Einprägungen durch die Vorsprünge entsteht. Es ist auch möglich, daß die Vorsprünge der Schneidscheiben geschränkt ausgebildet sind, so daß die Vorsprünge der einen Schneidscheibe in die durch die Rücksprünge der anderen Schneidscheibe erzeugten Ausnehmungen eingreifen. Die Schränkung - ähnlich wie bei Zähnen von Sägeblättern - kann auch so ausgebildet sein, daß die vorderen Bereiche der Vorsprünge aus der Ebene der anderen Schneidscheibe im Bereich deren Vorsprünge herausschauen.

Die Schneidscheiben können konvex oder konkav ausgebildet sein. Dies erhöht die Formstabilität der Schneidscheiben und gestaltet den Öffnungsbereich sowie die Querschnittsform des Spalts. In der einfachsten Ausführungsform können die Schneidscheiben aber auch als ebene Scheiben ausgebildet sein, deren Ineinandergreifen nur durch die Achsanordnung zueinander festgelegt und bestimmt wird.

Die Erfindung wird anhand bevorzugter Ausführungsbeispiele weiter erläutert und beschrieben. Es zeigen:
- Fig. 1: eine Seitenansicht von Teilen des Sägerätes,
- Fig. 2: eine Detaildarstellung des Sägerätes im Bereich der Schneidscheiben,
- Fig. 3: eine Draufsicht auf den durch die Schneidscheiben gebildeten Spalt, der durch das Säschar zu einer Furche verformt wird,
- Fig. 4: eine Stirnansicht des Sägerätes in Richtung IV in Fig. 2,
- Fig. 5: ein Detail X gemäß Fig. 4,
- Fig. 6: einen Schnitt gemäß der Linie VI-VI in Fig. 3,
- Fig. 7: einen Schnitt gemäß der Linie VII-VII in Fig. 3,
- Fig. 8: einen Schnitt gemäß der Linie VIII-VIII in Fig. 3,
- Fig. 9: einen Schnitt gemäß der Linie IX-IX in Fig. 3,
- Fig. 10: eine Seitenansicht zweier Schneidscheiben in einer weiteren Ausführungsform,
- Fig. 11: eine ähnliche Darstellung wie Fig. 10 an einer weiteren Ausführungsform zweier Schneidscheiben,
- Fig. 12: eine weitere Ausführungsform zweier Schneidscheiben,
- Fig. 13: einen Schnitt durch zwei konvex ausgebildete Schneidscheiben und
- Fig. 14: einen Schnitt durch zwei konkav ausgebildete Schneidscheiben.

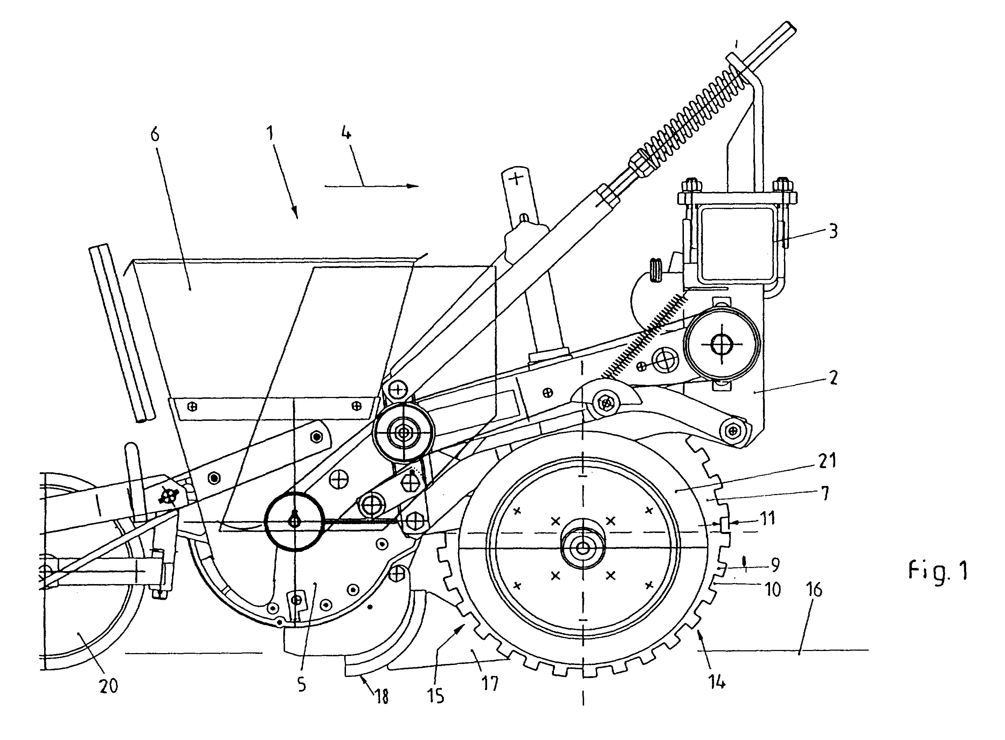

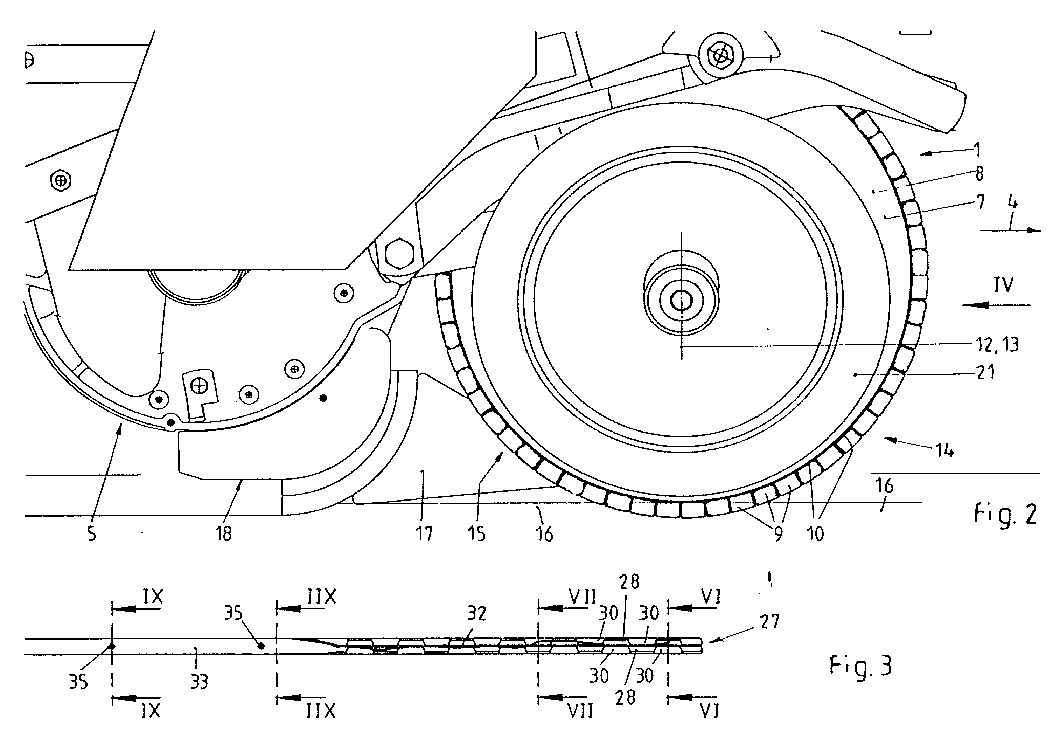

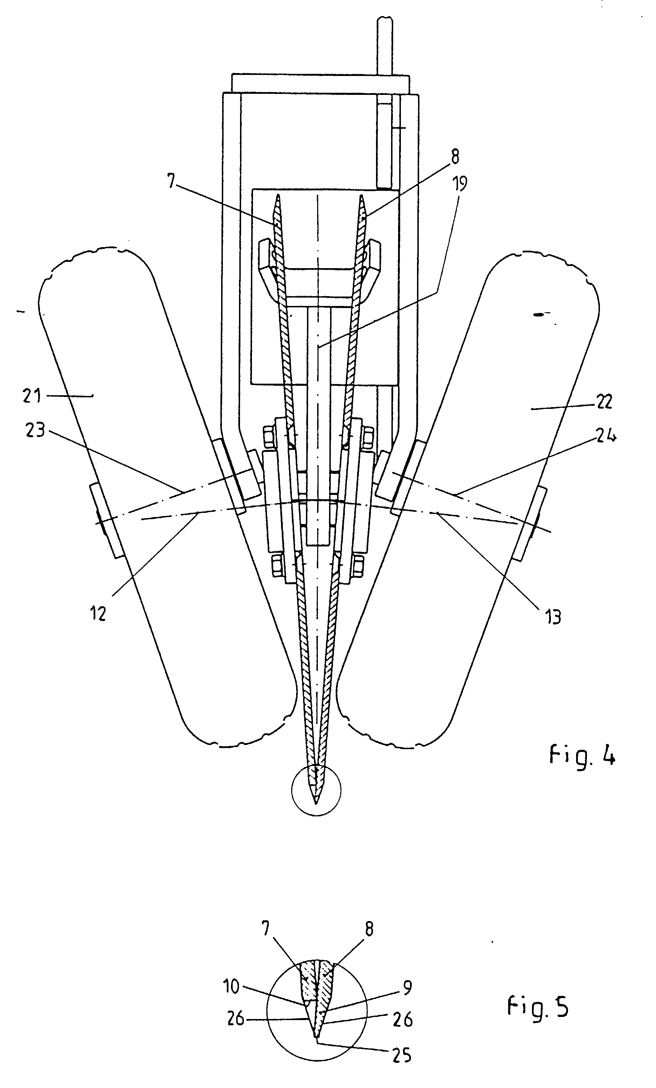

Das in Fig. 1 in Seitenansicht dargestellte Sägerät 1 ist mit seinem Rahmen 2 an einen über die Arbeitsbreite weitgehend durchgehenden Maschinenrahmen 3 einer Sämaschine angeschraubt. Es versteht sich, daß eine Mehrzahl von Sägeräten 1 an der Sämaschine vorgesehen ist, wobei die einzelnen Sägeräte 1 im Reihenabstand nebeneinander angeordnet sind. Die Fahrtrichtung 4 ist durch einen Pfeil angegeben. Die Ausbildung der einzelnen Elemente des Sägerätes 1 ist an sich bekannt und bedarf daher keiner näheren Erläuterung. Eine Dosiervorrichtung 5 ist an einer üblichen Lenkerkonstruktion, insbesondere an Parallelogrammlenkern, aufgehängt. Auf der Dosiervorrichtung 5 sitzt ein Behälter 6 zur Aufnahme der Saatgutkörner. In Fahrtrichtung 4 vorn sind zunächst zwei Schneidscheiben 7 und 8 nebeneinander angeordnet (siehe auch Fig. 2 und 4). In Fig. 1 ist der Übersichtlichkeit halber nur die eine Schneidscheibe 7 dargestellt, um in deren Randbereich vorgesehene Vorsprünge 9 und Rücksprünge 10 zu verdeutlichen. Wie aus Fig. 1 ersichtlich ist, besitzen die Vorsprünge 9 bzw. Rücksprünge 10 etwa rechteckig begrenzten Umriß und erstrecken sich mit gleichmäßiger, halber Teilung über den Umfang der Schneidscheibe 7. In Fig. 2 sind beide Schneidscheiben 7 und 8 mit ihren Vorsprüngen 9 und 10 dargestellt. Beide Schneidscheiben 7 und 8 können identisch ausgebildet sein, wobei sie in Umfangsrichtung lediglich um eine halbe Teilung versetzt zueinander angeordnet sind, so daß sich in der Seitenansicht die Vorsprünge 9 der Schneidscheibe 7 dort befinden, wo die Rücksprünge 10 der Schneidscheibe 8 sind und umgekehrt. Die Breite der Vorsprünge 9 ist etwas geringer als die Breite der Rücksprünge 10, damit die Vorsprünge 9 ggfs. in die Rücksprünge 10 eingreifen können. Die Vorsprünge 9 enden insoweit radial auf einem größeren Durchmesser als die Rücksprünge 10. Die Differenz zwischen beiden Radien, also die radiale Länge 11, mit der die Vorsprünge 9 die Rücksprünge 10 in radialer Richtung überragen, entspricht dieser Differenz. Die Schneidscheiben 7 und 8 sind mit ihren Achsen 12 und 13 (Fig. 5) schräg zu einer Horizontalebene wie auch zu einer Vertikalebene angeordnet, und zwar derart, daß die Schneidscheiben 7 und 8 in ihrem oberen Bereich weiter voneinander entfernt sind als im unteren Bereich. Die Schneidscheiben 7 und 8 bilden im Vertikalschnitt gemäß Fig. 4 eine V-förmige Anordnung. Weiterhin sind die Achsen 12 und 13 so gegeneinander schräggestellt, daß die Schneidscheiben 7 und 8 in einem vorderen Bereich 14 (Fig. 1) näher beieinander sind als in einem hinteren Bereich 15. Die Anordnung kann insbesondere so getroffen sein, daß die Vorsprünge 9 und Rücksprünge 10 im vorderen Bereich 14 nahezu in einer Linie liegen, in der sie in den Boden 16 eindringen, während sie im hinteren Bereich 15 so weit voneinander beabstandet sind, daß hier ein Zwischenraum entsteht, in den zwischen den Schneidscheiben 7 und 8 ein Scharsech 17, welches als dünne, metallene Platte ausgebildet ist, eingreifen kann. Das Scharsech 17 ist am vorderen Ende eines Säschares 18 befestigt, und zwar in der vertikalen Längsmittelebene 19 des Sägerätes 1. Das Säschar 18 besitzt in bekannter Weise kufenförmige Gestalt mit einem etwa V-förmigen Umriß. Es ist unterhalb der Dosiervorrichtung 5 angeordnet und dringt teilweise in den Boden 16 ein. Mit Abstand hinter dem Säschar 18 ist eine Andruckrolle 20 vorgesehen, die dem Schließen der Furche nach dem Sävorgang und dem Andrücken des Bodens dient. Es versteht sich, daß weitere Elemente zwischen dem Säschar 18 und der Andruckrolle 20 vorgesehen sein können. Da diese jedoch für die vorliegende Erfindung ohne Bedeutung sind, ist auf deren Wiedergabe verzichtet.

Neben den Schneidscheiben 7 und 8 sind zwei Räder 21 und 22 mit ihren Achsen 23 und 24 schrägstehend und in Zuordnung zu den Schneidscheiben 7 und 8 angeordnet, wie dies aus Fig. 4 erkennbar ist. Die Schneidscheiben 7 und 8 besitzen einen größeren äußeren Durchmesser als die Räder 21 und 22, so daß der Überstand, der im übrigen verstellbar ist, die Eindringtiefe der Schneidscheiben 7 und 8 in den Boden 16 festlegt und bestimmt. Die Schneidscheiben 7 und 8 sind frei drehbar angeordnet und werden indirekt durch den Boden 16 angetrieben. Sie sind drehfest miteinander verbunden, insbesondere durch das gegenseitige Eindringen der Vorsprünge 9 in die Rücksprünge 10, wie dies aus Fig. 5 erkennbar wird. Fig. 5 läßt auch erkennen, daß die beiden Schneidscheiben 7 und 8 so aneinander angestellt sind, daß sie sich zumindest in einem Punkt im Bereich der Rücksprünge 10 aneinander abstützen. Es ist aber auch möglich, daß die Anordnung so getroffen ist, daß die Spitzen 25 der Vorsprünge 9 der beiden Schneidscheiben 7 und 8 etwa auf einer gemeinsamen Umfangslinie zu liegen kommen, so daß sich die beiden Schneidscheiben 7 und 8 dann mit ihren Vorsprüngen 9 berühren würden, wenn ihr umfangsmäßiger Versatz um eine halbe Teilung beseitigt wird. Wie aus Fig. 5 erkennbar ist, können die Vorsprünge 9 seitlich angeschärft, also mit einer Schrägfläche 26 versehen sein, die das Eindringen in den Boden 16 begünstigt und eine allzu große Schräglage der Achsen 12 und 13 gegeneinander vermeidet.

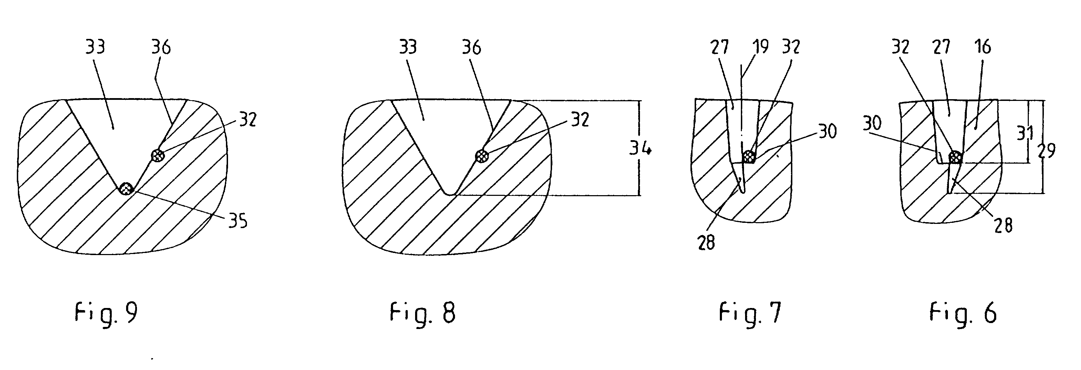

Fig. 3 sowie die Querschnitte, die in den Fig. 6 bis 9 wiedergegeben sind, verdeutlichen die Arbeitsweise der beiden Schneidscheiben 7 und 8 in Verbindung mit dem Säschar 18. Fig. 3 ist mit Bezug auf Fig. 2 zu sehen, d. h. es ist das sich im Boden 16 ergebende Bild dargestellt, welches aus dem Zusammenwirken der Schneidscheiben 7 und 8 sowie des Säschars 18 entsteht. Die beiden Schneidscheiben 7 und 8 öffnen den Boden 16 in Form eines Spalts 27. An dieser Stelle gemäß dem Querschnitt der Fig. 6 befindet sich an der Schneidscheibe 8 ein Vorsprung 9 und an der Schneidscheibe 7 ein Rücksprung 10. Der Vorsprung 9 formt im Boden eine örtliche Vertiefung 28 ein, so daß hier die Spitze 25 dieses Vorsprunges 9 die größte Tiefe im Spalt 27 erreicht. Der Spalt 27 besitzt also eine Tiefe 29, die der Erstreckung der Vorsprünge 9 der Schneidscheibe 8 entspricht. Gleichzeitig bildet in diesem Schnitt der Rücksprung 10 der Schneidscheibe 7 ein höckerartiges Auflager 30, welches nur eine vergleichsweise geringere Tiefe 31 aufweist. Die Differenz der Tiefen 29 und 31 beträgt etwa mindestens ein Drittel der Tiefe 29 des Spalts 27. Um eine halbe Teilung versetzt kehren sich die Verhältnisse um. Hier bildet der Vorsprung 9 der Schneidscheibe 7 eine Vertiefung 28 (Fig. 7). Der Rücksprung 10 der Schneidscheibe 8 bildet hier ein Auflager 30. Mit jeder Teilung ändern sich die Verhältnisse in Fahrtrichtung 4, wie beschrieben. Auf diese Art und Weise ergibt sich der Spalt 27 in einer besonderen Formgebung. Im oberen Bereich ist der Spalt 27 mit einer leicht V-förmig verlaufenden Wandung versehen. Unterhalb der Horizontalebene der Auflager 30, also in der Tiefe 31, wechseln in Fahrtrichtung jeweils Vertiefungen 28 und Auflager 30 nacheinander ab, und zwar um eine halbe Teilung gegeneinander versetzt relativ zu der Längsmittelebene 19. Damit wird eine Kette von Auflagern 30 geschaffen, auf denen ein Stück Strohhalm 32 zu liegen kommt, wenn es in den Spalt 27 hineinfällt. Mit anderen Worten wird der Strohhalm 32 daran gehindert, den Boden des Spalts 27 einzunehmen, sich also am Grunde des Spalts 27 abzulagern. Gleiches gilt sinngemäß für andere Pflanzenteile.

In den so gebildeten Spalt 27 greift nun das Säschar 18 bei der Vorwärtsbewegung des Sägerätes 1 gemäß der Fahrtrichtung 4 ein und verformt den Querschnitt des Spalts 27 zu einer Furche 33, wie dies in den Fig. 3 und 8 und 9 dargestellt ist. Je nach der Querschnittsgestalt des Säschares 18 wird dabei der Spalt 27 auch vertieft, so daß er eine Tiefe 34 bekommt. Die Tiefe 34 kann größer oder gleich sein wie die Tiefe 29 des Spalts 27. In der Regel wird die Tiefe 34 größer als die Tiefe 29 sein, damit der Boden an dieser Stelle verfestigt wird und ein sicheres Auflager für das von der Dosiervorrichtung 5 abgeworfene Saatgutkorn 35 bildet. Der Querschnitt des Säschares 18 kann so gewählt sein, daß seine Breite im Bereich der Oberfläche des Bodens 16 gleich der Breite des Spalts 27 ist. Dies ist anhand von Fig. 3 ersichtlich. In der Regel jedoch wird das Säschar 18 eine vergleichsweise größere Breite aufweisen und damit die Breite des Spalts 27 auch im Bereich der Oberfläche des Bodens 16 verbreitern, wie dies die Fig. 8 und 9 erkennen lassen. Die beabsichtigte Wirkung ist darin zu sehen, daß das Säschar 18 bei seinem Eindringen und bei seiner Vorwärtsbewegung durch den Boden 16 den auf den Auflagern 30 abgelegten Strohhalm 32 erfaßt und so seitlich in die Wandung 36 der Furche 33 eindrückt, wie dies die Fig. 8 und 9 wiedergeben. Damit ist der Strohhalm 32 in der Wandung 36 etwa in einer Höhe, die der Differenz der Tiefen 29 und 31 entspricht, festgelegt, so daß der Grund der Furche 33 frei bleibt und das Saatgutkorn 35 bis zum Grunde der Furche 33 herabfallen kann, so daß es dort in unmittelbarem Anschluß zum Erdreich abgelegt wird. Anschließend wird die Furche 33 mit an sich bekannten Mitteln geschlossen und das Erdreich über die Andruckrolle 20 angedrückt, wobei z. B. ein Teppich aus gehäckseltem Stroh weitgehend unverrückt liegenbleibt und auch den Bereich der Säreihe überdeckt, so daß auch dieser Bereich vor übermäßiger Austrocknung und Erosion geschützt ist.

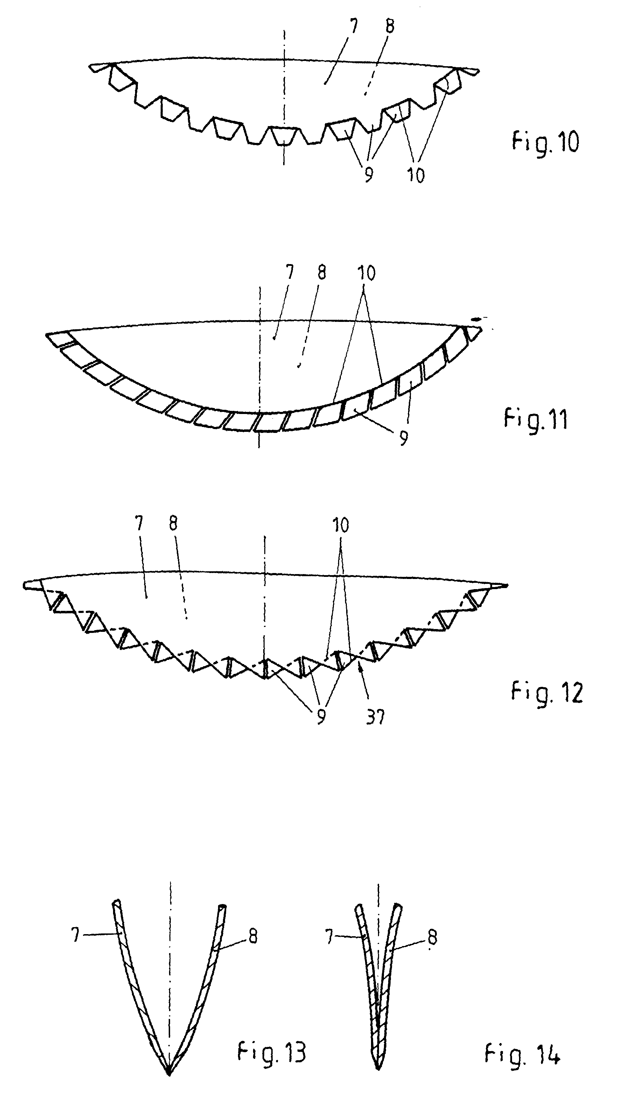

Während anhand der Fig. 1 und 2 etwa rechteckig umgrenzte Vorsprünge 9 und Rücksprünge 10 an den Schneidscheiben 7 und 8 verdeutlicht wurden, zeigen die Fig. 10 bis 12 weitere Ausführungsmöglichkeiten. Bei dem Ausführungsbeispiel der Fig. 10 sind sowohl die Vorsprünge 9 wie auch die Rücksprünge 10 in Trapezform ausgebildet. Das Ausführungsbeispiel der Fig. 11 zeigt etwa parallelogrammartig umrissene Vorsprünge 9 und Rücksprünge 10, die in Umlaufrichtung geneigt angeordnet sind. Die Vorsprünge 9 können - wie bei der Herstellung von Sägebändern oder Sägeblättern üblich - geschränkt werden, also eine Umbiegung gegenüber der jeweiligen Schneidscheibe aufweisen. Bei dem Ausführungsbeispiel der Fig. 12 besitzen die Vorsprünge 9 Dreieckform, und die Rücksprünge 10 ergeben sich in entsprechender Weise. Bei dieser Ausführungsform ergeben sich die Auflager 30 entsprechend den Verschneidungslinien der Vorsprünge 9 etwa an einer Stelle 37. Die Ausbildung kann auch dabei wiederum so getroffen sein, daß die Tiefe 31 etwa um ein Drittel bis um die Hälfte der Tiefe 29 geringer sein kann. Es muß also immer dafür Sorge getragen sein, daß auch die Rücksprünge 10 nennenswert unter die Oberfläche des Bodens 16 in diesen eindringen und auf diese Art und Weise die Auflager 30 bilden.

Die Fig. 13 und 14 verdeutlichen, daß die Schneidscheiben 7 und 8 auch konvex oder konkav ausgebildet bzw. verformt sein können, um einerseits ihre Stabilität zu erhöhen und um andererseits auf die Formgebung des Spalts 27 Einfluß zu nehmen. Es versteht sich, daß die Schneidscheiben 7 und 8 auch als ebene Scheiben ausgebildet sein können.

### BEZUGSZEICHENLISTE

- 1 -: Sägerät
- 2 -: Rahmen
- 3 -: Maschinenrahmen
- 4 -: Fahrtrichtung
- 5 -: Dosiervorrichtung
- 6 -: Behälter
- 7 -: Schneidscheibe
- 8 -: Schneidscheibe
- 9 -: Vorsprung
- 10 -: Rücksprung
- 11 -: Länge
- 12 -: Achse
- 13 -: Achse
- 14 -: Bereich
- 15 -: Bereich
- 16 -: Boden
- 17 -: Scharsech
- 18 -: Säschar
- 19 -: Längsmittelebene
- 20 -: Andruckrolle

- 21 -: Rad
- 22 -: Rad
- 23 -: Achse
- 24 -: Achse
- 25 -: Spitze
- 26 -: Schrägfläche
- 27 -: Spalt
- 28 -: Vertiefung
- 29 -: Tiefe
- 30 -: Auflager

- 31 -: Tiefe
- 32 -: Strohhalm
- 33 -: Furche
- 34 -: Tiefe
- 35 -: Saatgutkorn
- 36 -: Wandung
- 37 -: Stelle

## Patentansprüche

1. Sägerät, insbesondere für die Mulch- und/oder Direktsaat, mit zwei V-förmig gegeneinander angestellten Schneidscheiben (7, 8) zum spaltartigen Öffnen des Bodens (16) und einem nachgeschalteten Säschar (18) zum Formen und Stabilisieren des Querschnitts der aus dem Spalt (27) gebildeten Furche (33), einer Dosiervorrichtung (5) zum Abwurf der Samenkörner (35) in die Furche (33) sowie einer Einrichtung zum Schließen der Furche, wobei die Schneidscheiben (7, 8) in ihren Randbereichen abwechselnd mit sich radial erstreckenden Vorsprüngen (9) und und Rücksprüngen (10) versehen sind und die radiale Länge (11) der Vorsprünge (9) über die Rücksprünge (10) hinaus kleiner als die Tiefe (29) des Spalts (27) ist, **dadurch gekennzeichnet**, daß die V-förmig gegeneinander angestellten Schneidscheiben (7, 8) sich in ihrem unteren, in den Boden (16) eindringenden Bereich berühren bzw. durchdringen, daß die sich radial erstreckenden Vorsprünge (9) und Rücksprünge (10) der beiden Schneidscheiben (7, 8) in Fahrtrichtung (4) in Zuordnung zueinander abwechselnd nebeneinander vorgesehen sind, und daß beide Schneidscheiben (7, 8) so gegeneinander positioniert und drehfest miteinander verbunden sind, daß die Rücksprünge (10) bzw. Vorsprünge (9) der beiden Schneidscheiben (7, 8) in dem gebildeten Spalt (27) quer zur Fahrtrichtung (4) gegeneinander versetzte höckerartige Auflager (30) erzeugen.

2. Sägerät nach Anspruch 1, **dadurch gekennzeichnet**, daß die beiden Schneidscheiben (7, 8) so gegeneinander positioniert und drehfest miteinander verbunden sind, daß die höckerartigen Auflager (30) quer zur Fahrtrichtung (4) mindestens aneinander anschließen.

3. Sägerät nach Anspruch 1 oder 2, **dadurch gekennzeichnet**, daß die Vorsprünge (9) und die Rücksprünge (10) an den Schneidscheiben (7, 8) rechteckigen Umriß aufweisen.

4. Sägerät nach Anspruch 1 oder 2, **dadurch gekennzeichnet**, daß die Vorsprünge (9) und die Rücksprünge (10) an den Schneidscheiben (7, 8) Trapezform oder Dreiecksform aufweisen.

5. Sägerät nach Anspruch 1 oder 2, **dadurch gekennzeichnet**, daß die radiale Länge (11) der Vorsprünge (9) an den Schneidscheiben (7, 8) über die Rücksprünge (10) hinaus mindestens etwa ein Drittel der Tiefe (29) des Spaltes (27) ausmacht.

6. Sägerät nach einem der vorangehenden Ansprüche 1 bis 5, **dadurch gekennzeichnet**, daß das den Schneidscheiben (7, 8) nachgeschaltete Säschar (18) ein Scharsech (17) aufweist und so an dem Sägerät (1) angeordnet ist, daß das Scharsech (17) zwischen die Schneidscheiben (7, 8) eingreift.

7. Sägerät nach einem der vorangehenden Ansprüche 1 bis 6, **dadurch gekennzeichnet**, daß die Achsen (12, 13) der Schneidscheiben (7, 8) so gegeneinander angestellt sind, daß die Vorsprünge (9) der beiden Schneidscheiben (7, 8) in dem in Fahrtrichtung (4) vorderen Bereich (14) näher beieinander angeordnet sind als im hinteren Bereich (15).

8. Sägerät nach einem der vorangehenden Ansprüche 1 bis 7, **dadurch gekennzeichnet**, daß die Achsen (12, 13) der Schneidscheiben (7, 8) so gegeneinander angestellt sind, daß die Vorsprünge (9) der einen Schneidscheibe (7) in die durch die Rücksprünge (10) der anderen Schneidscheibe (8) erzeugten Ausnehmungen eingreifen.

9. Sägerät nach einem der vorangehenden Ansprüche 1 bis 7, **dadurch gekennzeichnet**, daß die Vorsprünge (9) der Schneidscheiben (7, 8) geschränkt ausgebildet sind, so daß die Vorsprünge (9) der einen Schneidscheibe (7) in die durch die Rücksprünge (10) der anderen Schneidscheibe (8) erzeugten Ausnehmungen eingreifen.

10. Sägerät nach einem der vorangehenden Ansprüche 1 bis 9, **dadurch gekennzeichnet**, daß die Schneidscheiben (7, 8) konvex oder konkav ausgebildet sind.

## Revendications

1. Semoir, en particulier pour le semis en paillage et/ou le semis direct, avec deux disques de coupe (7, 8) formant entre eux un V pour fendre le sol (16) et avec un soc (18) disposé derrière les disques de coupe, destiné à former et à stabiliser la section transversale de la fourche (33) obtenue à partir de la fente (27, avec un dispositif de dosage pour déposer les graines de semence (35) dans la fourche ainsi qu'avec un dispositif pour fermer la fourche, où les disques de coupe (7, 8) présentent dans leurs zones marginales alternativement des saillies (9) et des creux (10) d'orientation radiale et où la longueur radiale (11) dont les saillies (9) dépassent les creux (10) est inférieure à la profondeur (29) de la fente (27), caractérisé en ce que les disques de coupe (7, 8) disposés en forme de V l'un par rapport à l'autre viennent se toucher ou se transpercer dans leur région inférieure, celle qui pénètre dans le sol (16), en ce que les saillies (9) et les creux (10) d'orientation radiale des deux disques de coupe (7, 8) sont, dans le sens de l'avancement (4), situés en correspondance alternativement côte à côte et en ce que les deux disques de coupe (7, 8) à solidarité de rotation sont positionnés l'un par rapport à l'autre de manière telle que les creux (10) ou les saillies (9) des deux disques de coupe donnent naissance, dans la fente (27) formée, à des bosses de support (30) décalées les unes par rapport aux autres transversalement au sens d'avancement (4).

2. Semoir suivant la revendication 1, caractérisé en ce que les deux disques de coupe (7, 8) sont positionnés l'un par rapport à l'autre et sont réunis à solidarité de rotation de manière telle que les bosses de support (30) formées transversalement au sens d'avancement (4) sont au moins raccordées l'une à l'autre.

3. Semoir suivant l'une ou l'autre des revendications 1 ou 2, caractérisé en ce que les saillies (9) et les creux (10) sur les disques de coupe (7, 8) ont un contour rectangulaire.

4. Semoir suivant l'une ou l'autre des revendications 1 ou 2, caractérisé en ce que les saillies (9) et les creux (10) sur les disques de coupe (7, 8) ont une forme trapézoïdale ou triangulaire.

5. Semoir suivant l'une ou l'autre des revendications 1 ou 2, caractérisé en ce que la longueur radiale (11) des saillies (9) sur les disques de coupe (7) dépasse la longueur radiale des creux (10) d'au moins sensiblement un tiers de la profondeur (29) de la fente (27).

6. Semoir suivant l'une quelconque des revendications précédentes de 1 à 5, caractérisé en ce que le soc (18) qui est situé derrière les disques de coupe (7, 8) présente un coutre (17), et est disposé sur le semoir (1) de manière telle que le coutre (17) s'engage entre les disques de coupe (7, 8).

7. Semoir suivant l'une quelconque des revendications précédentes de 1 à 6, caractérisé en ce que les axes (12, 13) des disques de coupe (7, 8) sont orientés l'un par rapport à l'autre de manière telle que les saillies (9) des deux disques de coupe (7, 8) sont, dans la zone avant (14) dans le sens d'avancement (4), plus proches l'une de l'autre que dans la zone arrière (15).

8. Semoir suivant l'une quelconque des revendications précédentes de 1 à 7, caractérisé en ce que les axes (12, 13) des disques de coupe (7, 8) sont orientés l'un par rapport à l'autre de manière telle que les saillies (9) d'un disque de coupe (7) s'engagent dans les évidements engendrés par les creux (10) de l'autre disque de coupe (8).

9. Semoir suivant l'une quelconque des revendications précédentes de 1 à 7, caractérisé en ce que les saillies (9) des disques de coupe (7, 8) sont avoyées, de telle sorte que les saillies (9) d'un des disques de coupe (7) s'engagent dans les évidements engendrés par les creux (10) de l'autre disque de coupe (8).

10. Semoir suivant l'une quelconque des revendications précédentes de 1 à 9, caractérisé en ce que les disques de coupe (7, 8) sont de forme convexe ou concave.

## Claims

1. Seed drill, especially for mulch- and/or direct seeding, comprising two knifing disks (7, 8) in V-shaped configuration to open the soil (16) in a gap-like manner and a seed blade (18) to form and stabilize the cross section of the furrow (33) formed out of the gap (27), a metering device (5) to throw down the seed grains (35) into the furrow (33), and means to close the furrow, the knifing disks (7, 8) being provided with alternating projections (9) and recesses (10) extending radially along its circumferences, while the radial length (11) of the projections (9) with respect to the recesses (10) is smaller than the depth (29) of the gap (27), **wherein**, the knifing disks (7, 8) arranged in V-shaped configuration contact and penetrate respectively each other in the lower region, the projections (9) extending radially and the recesses (10) of the two knifing disks (7, 8) are provided with respect to each other in driving direction (4) side by side, and both of the knifing disks (7, 8) are positioned with respect to each other and connected for common rotation so that the recesses (10) and the projections (9) of the two knifing disks (7, 8) form humplike supports (30) within the gap (27), the humplike supports being displaced with respect to each other across the driving direction (4).

2. The seed drill of claim 1, **wherein**, both of the knifing disks (7, 8) are positioned with respect to each other and connected for common rotation in a manner so that the humplike supports (30) across the driving direction (4) are located at least adjacent to each other.

3. The seed drill of claims 1 or 2, **wherein**, the projections (9) and the recesses (10) of the knifing disks (7, 8) have a rectangular circumference.

4. The seed drill of claims 1 or 2, **wherein**, the projections (9) and the recesses (10) of the knifing disks (7, 8) have a triangular or a trapezoidal circumference.

5. The seed drill of claims 1 or 2, **wherein** the radial length (11) of the projections (9) of the knifing disks (7, 8) is at least a third of the depth (29) of the gap (27).

6. The seed drill of one of the preceding claims 1 to 5, **wherein** the seed blade (18) positioned downstream the knifing disks (7, 8) can have a coulter (17) located on the seed drill (1) so that the coulter (17) extends between the knifing disks (7, 8).

7. The seed drill of one of the preceding claims 1 to 6, **wherein** the axes (12, 13) of the knifing disks (7, 8) are arranged with respect to each other in a manner so that the projections (9) of the two knifing disks (7, 8) in front (14) are positioned with a smaller distance to each other than behind (15).

8. The seed drill of one of the preceding claims 1 to 7, **wherein** the axes (12, 13) of the knifing disks (7, 8) are arranged with respect to each other in a manner so that the projections (9) of the one knifing disk (7) extend through the recesses (10) of the other knifing disk (8).

9. The seed drill of one of the preceding claims 1 to 7, **wherein** the projections (9) of the knifing disks (7, 8) are set so that the projections (9) of the one knifing disk (7) extend through the recesses (10) of the other knifing disk (8).

10. The seed drill of one of the preceding claims 1 to 9, **wherein** the knifing disks (7, 8) can have a convex or a concave shape.
